Europäisches Patentamt

European Patent Office

Office européen des brevets

⑩

(11) Publication number: **0 256 108**
**B1**

(12) **EUROPEAN PATENT SPECIFICATION**

(45) Date of publication of patent specification: **24.10.90**

(21) Application number: **87901612.9**

(22) Date of filing: **12.02.87**

(86) International application number:
**PCT/IT87/00011**

(87) International publication number:
**WO 87/05087 27.08.87 Gazette 87/19**

(51) Int. Cl.⁵: **F 16 L 37/08**

(54) **A QUICKLY ENGAGEABLE-DISENGAGEABLE PIPE JOINT.**

(30) Priority: **13.02.86 IT 51986 u**

(43) Date of publication of application:
**24.02.88 Bulletin 88/08**

(45) Publication of the grant of the patent:
**24.10.90 Bulletin 90/43**

(84) Designated Contracting States:
**AT BE CH DE FR GB LI LU NL SE**

(56) References cited:
**DE-A-3 008 962**
**US-A-3 743 326**
**US-A-4 220 361**

(73) Proprietor: **GOBBI, Gianfranco**
**Via Fermo, 16**
**I-60100 Ancona (IT)**

(72) Inventor: **GOBBI, Gianfranco**
**Via Fermo, 16**
**I-60100 Ancona (IT)**

㊔074 Representative: **de Simone, Domenico et al**
**Ing. Barzanò & Zanardo Roma S.p.A. Via**
**Piemonte 26**
**I-00187 Roma (IT)**

Courier Press, Leamington Spa, England.

## Description

The present invention relates to a quickly engageable-disengageable joint for hydraulic system pipes, which joint in addition is able to allow the pipe to expand thermally sufficiently to avoid the danger of too high tensive stresses that in some cases could also compromise the soundness of the materials so stressed.

The present finding is to remedy the numerous drawbacks occurring in the quickly engageable joints commercially available at the present time, before all the impossibility of easily and quickly withdrawing the pipe once the same has been inserted into the joint.

When said disengagement operation is to be performed because of any reason, the only possible solution employing the quickly engageable joints available at the present time is that of cutting a length of the pipe near the joint. In most cases, this joint is to be disposed of and, just in some instances, it can be recovered by means of a complex procedure involving the extraction of the terminal length of the cut pipe.

Moreover, the quickly engageable joints produced up to now are affected by a further drawback which is particularly serious above all in the case of employment of metallic pipes, said drawback consisting in that no thermal expansion of the pipe is allowed, or anyway in that the thermal expansion allowed is not sufficient to prevent stresses from arising which might compromise the strength of the materials employed.

The gravity of the drawbacks mentioned above gave rise to the need for a new type of quickly engageable joints, which type could allow an equally rapid disengagement operation to be performed and also a remarkable thermal expansion of the pipe to occur.

US—A—3 743 326 discloses a quickly engageable-disengageable pipe joint comprising a hollow cylindrical body whose inside passage bore is divided into three subsequent sections of decreasing diameters starting from the insertion side: the innermost section has an inner diameter equal to the inner diameter of the pipe to be inserted for connection, the intermediate section, which connects to the innermost section through a radial shoulder for the abutment of the pipe inserted, has a diameter slightly higher than the outer diameter of said pipe, so as to house an O-ring seal around said pipe, and the outermost section, which also connects to the intermediate section through a radial shoulder, houses a collar which can axially slide within said outer section and is adapted to receive therein the end of the pipe to be connected. The collar is of such an axial length as to partially protrude out of the outer bore section, and is provided, at its end opposite to the insertion side, with a plurality of resilient fingers for gripping the external surface of the pipe. The outermost bore section has a conical camming surface that interferes with the external surface of said resilient fingers so as to push said fingers inwardly into gripping engagement with the pipe when the pipe itself, and therefore the collar, is pulled backward.

In the above-mentioned document, the disengagement of the pipe is said to be obtained by holding the collar in its innermost position, i.e. by pushing it forward, so that the resilient fingers spontaneously disengage the outer surface of the pipe.

It is an object of the present invention to provide an improved quickly engageable-disengageable pipe joint of the kind disclosed hereinbefore.

A further object of the present invention is to supply a joint of such a structural configuration as not to cause the formation inside the same of flow cross sections of lower diameter which would inevitably give rise to pressure drops across the same.

Accordingly, the present invention specifically provides a quickly engageable-disengageable pipe joint comprising:

—a hollow cylindrical body whose inside flow path is divided into three lengths of decreasing diameters starting from the insertion side; the first duct length of higher inner diameter, having, at an intermediate position along its inside surface, an annular rib in correspondence of which a reduced flow path cross section of the duct length is formed, and an annular bottom wall; the second duct length, of intermediate diameter, having a diameter that is slightly higher than the outer diameter of a pipe for connection of which said joint is adapted, ending in a flat annular bottom wall for the abutment of said pipe, the tight seal being obtained through a gasket ring housed within said second duct length; the third duct length having an inner diameter exactly equal to the inner diameter of said pipe;

—a collar housed within said first duct length and capable of sliding axially within the same, of inner diameter practically equal to the outer diameter of said pipe and of such length as to protrude always partially out of said first duct length, even at its maximum forward stroke, said collar being provided on its end opposite to that intended for the insertion of said pipe with an annular series of flexible tabs whose outer surface interferes with said annular rib when said collar is pulled axially backward, so causing an inward bending of said tabs;

wherein said annular bottom wall of said first duct length is frustum-shaped so as to taper towards the insertion side, the free ends of said flexible tabs of said collar interfering with said frustum-shaped annular bottom wall when said collar is pushed axially towards the end of stroke position, so as to be lifted off the pipe, thus disengaging the pipe. Furthermore, said gasket ring is housed within an annular groove provided in said second duct length and said third duct length has an outer threaded surface, so as to be coupled with another section of pipe or fitting internally threaded.

The attention is drawn to the fact that the frustum-shaped connection wall in which the length of the duct housing the collar ends internally has its apex towards said collar, i.e. such apex is turned towards the pipe insertion section.

Preferably, the flexible tabs of the collar itself have their tips beveled, so as to make a frustum-shaped surface oriented concordantly with said frustum-shaped connection wall. Thus, pushing said collar forward till the end of the stroke, the radial spreading out of all flexible tabs mentioned above is smoothly obtained by means of said frustum-shaped surface against which said tabs go and abut.

When the collar is withdrawn from its seat, the narrowing rib mentioned above, provided within the same, intervenes performing just the opposite action with respect to the action exerted by said frustum-shaped wall; indeed it exerts a centripetal pressure on the external back of all such tabs which, bending towards the inside, tend to close up towards the central part, so allowing the collar to be completely withdrawn in the absence of the pipe. On the contrary, when the pipe is assembled with the joint, its presence prevents said tabs bending towards the central part to an extent sufficient to allow the collar to be extracted through the narrow section of said hollow cylindrical body in correspondence with the annular rib provided in the same.

Furthermore, in the latter instance, a number of small teeth provided on the inside profile of the flexible tabs would grip with an ever increasing pressure the outside surface of the pipe, so that said pipe is surely kept from being extracted when the plant is working, even though very high pulling forces are exerted on the same.

However, the pipe can be very simply and quickly disengaged if the collar is pushed by hand to a position towards the end of the stroke while pulling the pipe backward with the other hand, the pipe being no longer clamped externally by the small teeth of the tabs. Indeed, the tabs are kept in the open position by the frustum-shaped surface against which they exert a contrasting action until the collar is kept pressed at its end of stroke position.

The disclosure of the present finding proceeds in the following for better understanding with reference to the enclosed drawings, which are shown just for illustrative and not for limitative purposes, in which drawings:

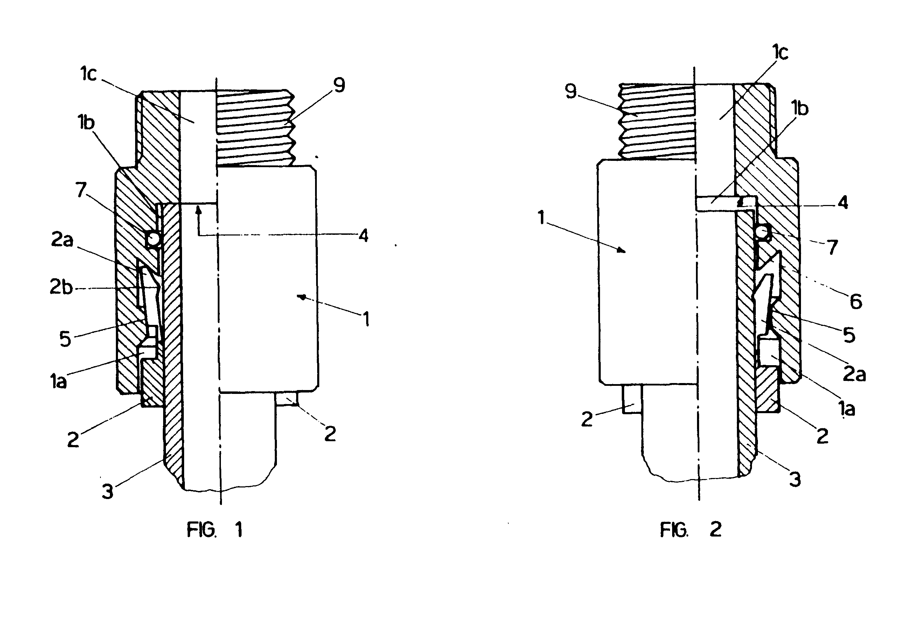

—Figure 1 is an illustration of the joint according to the present invention, half the joint being shown in sectional view and the other half in full view, in which illustration the collar is shown in its end of stroke position with the elastic tabs spread apart;

—Figure 2 is an illustration of the joint according to the present invention, half joint being in sectional view while the other half is in full view, in which illustration the collar is shown in the backward position with the elastic tabs closed up around the pipe.

With reference now to the Figures mentioned above, the joint according to the present invention has a hollow cylindrical body (1), inside which three duct lengths are present that are of decreasing diameter starting from the side where the pipe is inserted.

The first pipe length (1a) houses and guides a long collar (2) having inside diameter practically equal to the outside diameter of the pipe (3). Said pipe is inserted into the duct length (1a) till it strikes the bottom wall (4) which is flat and of annular shape, at which the intermediate duct length (1b) connects with the terminal length (1c).

The duct length (1a) narrows about halfway because of the presence of an annular rib (5) and it ends beyond the same in a frustum-shaped bottom wall (6), with which it connects to the intermediate duct length (1b) mentioned above, whose diameter is just a little higher than the outer diameter of the pipe (3). A sealing ring (O-ring) (7) is provided along the intermediate length (1b), said O-ring being recessed within a suitable annular groove.

The collar (2) ends inside the duct (1a) in a series of flexible tabs (2a) obtained by means of some deep diametral cuts or notches arranged at regular angular spaces.

Said diametral notches extend longitudinally along the collar (2) till they reach an intermediate zone of said collar of lower thickness, so that said tabs (2a) as a result have a reduced connection section which makes the same more flexible.

In the inside part the profile of each tab (2a) is characterized in that it has a small tooth (2b) intended for gripping the surface of the pipe (3) so as to lock the same when attempt is made at extracting said pipe without keeping the collar (2) in the forward position up to the end of stroke.

Finally the attention is drawn to the end duct length (1c) whose diameter is exactly equal to the inner diameter of the pipe (3) so as not to give rise to changes in the cross section in the path of the joint, as an undesirable local pressure drop would inevitably occur across said section changes.

The reference number (9) points out the thread on the outside surface of the terminal duct length (1c).

**Claims**

1. A quickly engageable-disengageable pipe joint comprising:
—a hollow cylindrical body (1) whose inside flow path is divided into three lengths (1a, 1b and 1c) of decreasing diameters starting from the insertion side; the first duct length (1a) of higher inner diameter, having, at an intermediate position along its inside surface, an annular rib (5) in correspondence of which a reduced flow path cross section of the duct length (1a) is formed, and an annular bottom wall (6); the second duct length (1b), of intermediate diameter, having a diameter that is slightly higher than the outer diameter of a pipe (3) for connection of which said joint is adapted, ending in a flat annular bottom wall (4) for the abutment of said pipe (3), the tight seal being obtained through a gasket ring (7) housed within said second duct length (1b); the

third duct length (1c) having an inner diameter exactly equal to the inner diameter of said pipe (3);

—a collar (2) housed within said first duct length (1a) and capable of sliding axially within the same, of inner diameter practically equal to the outer diameter of said pipe (3) and of such length as to protrude always partially out of said first duct length (1a), even at its maximum forward stroke, said collar being provided on its end opposite to that intended for the insertion of said pipe (3) with an annular series of flexible tabs (2a) whose outer surface interferes with said annular rib (5) when said collar (2) is pulled axially backward, so causing an inward bending of said tabs (2a); characterized in that said annular bottom wall of said first duct length (6) is frustum-shaped so as to taper towards the insertion side, in that the free ends of said flexible tabs (5) of said collar (2) interfere with said frustum-shaped annular bottom wall (6) when said collar (2) is pushed axially towards the end of stroke position, so as to be lifted off the pipe, in that said gasket ring (7) is housed within a annular groove provided in said second duct length (1b) and in that said third duct length (1c) has an outer threaded surface (9).

2. A quickly engageable-disengageable joint according to claim 1, wherein said flexible tabs (2a) in which said collar (2) ends frontally are obtained by cutting deep diametral notches at regular angular spaces which extend longitudinally in the walls of the collar (2) up to a central length of the collar (2) itself of lower thickness, so that the tabs (2a) have a cross section at their bases of reduced sizes which gives the same a very high flexibility, the inside profile of each tab (2a) being designed so as to have a small tooth (2b).

3. A quickly engageable-disengageable joint according to claims 1 or 2, wherein said flexible tabs (2a) have their free ends beveled on the inside surface so that they can easily interfere with said frustum-shaped annular bottom wall (6).

**Patentansprueche**

1. Schnell ein- und ausrueckbare Rohrkupplung:

—mit einem zylindrischen Hohlkoerper (1), dessen innere Strombahn in drei Laengsbereiche (1a, 1b und 1c) mit einem sich von der Einsteckseite verkleinerden Durchmesser unterteilt ist und zwar ein erster Laengsbereich (1a) mit einem groesseren Innerdurchmesser, der an einer Zwischenstelle laengs seiner inneren Flaeche eine ringfoermige Bodenwand (6) und eine ringfoermige Rippe (5) aufweist, an welcher sich ein verminderter Strombahnquerchnitt des Laengsbereiches (1a) bildet, ein zweiter Laengsbereich (1b) mit einem mittleren Innendurchmesser, der kleinmaessig groesser als der Aussendurchmesser eines Rohres (3) ist, zur dessen Verbindung die genannte Kupplung vorgesehen ist, wobei der zweite Laengsbereich an einer flachen ringfoermigen Bodenwand zur Abstuetzung des genannten Rohres (3) endet und ein Dichtungsring (7) innerhalb des genannten zweiten Laengsbereich (1b) angeordnet ist und ein dritter Laengsbereich (1c) mit einem Innendurchmesser, der dem inneren Durchmesser der genannten Rohres (3) genau entspricht;

—mit einem Bundring (2), der innerhalb des ersten Laengsbereiches (1a) gleitbar angebracht ist, einen dem Aussendurchmesser des genannten Rohres (3) praktisch gleichen Innendurchmesser hat und eine aus dem genannten ersten Laengsbereich (1a) auch bei hoechsten Vorlauf immer teilweise vorsprungende Laenge aufweist, wobei dieser Bundring an seinem, dem zum Einsetzen des genannten Rohrs (3) vorgesehenen Ende gegenuberstehenden Ende mit einer ringfoermigen Reihe von biegsamen Zungen (2a) versehen ist, deren Aussenflaeche an der Rippe (5) angreift, wenn der genannte Bundring axial nach hinten verschoben wird und so eine Biegung nach innen der Zungen (2a) hervorruft; dadurch gekennzeichnet, dass die genannte ringfoermige Bodenwand (6) des genannten ersten Laengsbereiches kegelstumpfartig ausgebildet ist und sich zur Einsteckseite hin vorjuengert; dass die freien Enden der genannten biegsamen Zungen (5) des genannten Bundringes (2) und der genannten kegelstumpffoermigen Bodenwand (6) angreifen, wenn der genannte Bundring (2) zum Ende der Hublaenge vorgeschoben wird, um so aus dem Rohr ausgehoben zu werden; dass der genannte Dichtring (7) innerhalb einer Nut im genannten zweiten Laengsbereich (1b) angeordnet ist und dass der genannte dritte Laengsbereich eine geschnittene Aussenflaeche hat.

2. Schnell ein- und ausrueckbare Rohrkupplung nach dem Anspruch 1, dadurch gekennzeichnet, dass die genannten biegsamen Zungen (2a), die den genannten Bundring stirnseitig schliessen, dadurch erhalten werden, dass diametrale Nute in gleichen Winkelabstand voneinander Tief eingeschnitten werden, wobei diese Nute sich laengsweise in die Waende des Bundringes (2) bis zur duenneren Mittellaenge desselben erstrecken, wodurch die Zungen (2a) an deren Grundflaechen einen kleineren Querschmitt und folgliche eine sehr grosse Biegsamkeit aufweisen, wobei das innere Profil einer jeden Zunge (2a) einen kleinen Zahn (2b) hat.

3. Schnell ein- und ausrueckbare Rohrkupplung nach den Anspruechen 1 oder 2, dadurch gekennzeichnet, dass die freien Enden der genannten Zungen (2a) an deren Innerflaechen abgeschraegt sind, um damit leicht und der kegelstumpfigen ringfoermigen Grundwand (6) anzugreifen.

**Revendications**

1. Joint à engagement et dégagement rapid pour tubes comprennant:

—un corps cave cylindrique (1), dont voi intérieure de flux est subdivisée en trois portions longitudinales de diamèter d'insertion décrosissant à partir du côté; la première portion longitudinale (1a) de diamètre intérieur plus grand, ayant en une position intermédiaire le long de sa surface intérieure un bourrelet annulair (5) formant la plus petite section transversale de la voie de flux de la première portion (1a), et une paroi de fond annulaire (6); la deuxième portion longitudinale (1b) de diamètre intermédiaire légèrement plus grand du diamètre extérieur d'un tube (3), pour la connexion duquel ledit joint est prévu, et lequel se termine à une paroi de fond annulaire et plate (4) pour appuyer ledit tube (3), l'étanchéité étant obtenue par une bague d'étanchéité (7) logée dans ladite deuxième portion longitudinale (1b); la troisième portion longitudinale (1c) ayant un diamètre intérieur exactement le même du diamètre intérieur dudit tube (3);

—un collet (2) logé dans ladite première portion longitudinale (1a) et capable de glisser en direction axiale dans la même et ayant un diamètre intérieur practiquement le même du diamètre extérieur dudit tube (3) et une longueur telle qu'il passe toujours partiellement par ladite première portion longitudinale (1a), même dans sa maximale course en avant, ledit collet étant prévu, sur son bout opposé au regard du bout destiné à l'insertion dudit tube (3), d'une série annulaire des languettes flexibles (2a) dont la surface extérieure interfére avec ledit bourrelet annulaire (5) quand ledit collet (2) est poussé en arrière en direction axiale, de sort que lesdittes languettes (2a) sont fléchées vers l'intérieur, caractérisé en ce que ladite paroi de fond (6) de la ditte première portion longitudinale est façomée de forme tronconique de façon à s'amincir vers le côté d'insertion; que les bouts libres des dittes languettes flexibles (5) dudit collet (2) interférent avec ladite paroi de fond tronconique quand ledit collet (2) est poussé dans la direction axiale vers la position de fin de course, de façon à étrê soulever en dehors du tube; que ladite bague d'échantéité (7) est logée dans une rainure annulaire dans ladite deuxième portion longitudinale (1b) et que ladite troisième portion longitudinale (1c) a une surface exteriéure filetée.

2. Joint à engagement et dègagement rapide pour tubes selon la revendication 1, caractérisée en ce que lesdittes languettes flexibles (2a), dans lesquelles se termine le côté frontale dudit collet (2), sont obtenues par l'entaille profonde des rainures à distances angulaires régulieres, qui s'étendent longitudinalement dans les parois du collet (2) jusque une position centrale d'épaisseur plus petit du collet (2), de façon que la base des languettes (2a) a une section transversale réduite pour conférer a les mêmes une flexibilité trés grande, la surface intérieur de chaque languette (2a) étant profilée de façon à présenter un petit dent (2b).

3. Joint à engagement et dégagement rapide pour tubes selon les revendications 1 ou 2, caractérisé en ce que la surface intérieure des bouts libres des dittes languettes flexibles (2a) est arrondie de façon à interférer facilement avec ladite paroi de fond annulaire tronconique (6).

FIG. 2

FIG. 1